# EUROPÄISCHE PATENTANMELDUNG

(11) **EP 3 001 168 A1**
(43) Veröffentlichungstag der Anmeldung: **30.03.2016**
(21) Anmeldenummer: 15184000.6
(22) Anmeldetag: 07.09.2015
(51) Int. Cl.: G01L 9/00

(54) **MIKROMECHANISCHE DRUCKSENSORVORRICHTUNG UND ENTSPRECHENDES HERSTELLUNGSVERFAHREN**

(30) Priorität: 09.09.2014 DE 102014217997; 04.09.2015 DE 102015217030
(71) Anmelder: ROBERT BOSCH GMBH, 70442 Stuttgart (DE)
(72) Erfinder: Rohlfing, Franziska, 71229 Leonberg (DE); Fuchs, Tino, 72076 Tuebingen (DE); Heuck, Friedjof, 70197 Stuttgart (DE)

(57) **Zusammenfassung**

Die Erfindung schafft eine mikromechanische Drucksensorvorrichtung und ein entsprechendes Herstellungsverfahren. Die mikromechanische Drucksensorvorrichtung umfasst ein erstes Substrat (W1) mit einer ersten Vorderseite (V1) und einer ersten Rückseite (R1), eine in dem ersten Substrat (W1) ausgebildete Wanne (WA), wobei in der Wanne (WA) eine erste Elektrode (E3) ausgebildet ist, welche sich über die Wanne (WA) hinaus in eine Peripherie der Wanne (WA) auf der erste Vorderseite (V1) erstreckt. Weiterhin umfasst sie ein zweites Substrat (W2) mit einer zweiten Vorderseite (V2) und einer zweiten Rückseite (R2), wobei die erste Vorderseite (V1) und die zweite Vorderseite (V2) derart über eine Bondverbindung (B1) miteinander verbunden sind, dass ein erster membranartiger Widerstandsbereich (R3) die erste Elektrode (E3) zum Bilden einer Kaverne (K) mit vorbestimmter Druckatmosphäre verschließt und in der Peripherie der Wanne (WA) die erste Elektrode (E3) elektrisch kontaktiert. Der erste Widerstandsbereich (R3) ist durch Anlegen von Druck (P) in die Wanne (WA) auslenkbar, so dass er die erste Elektrode (E3) innerhalb der Wanne (WA) elektrisch kontaktiert.

## Beschreibung

Die Erfindung betrifft eine mikromechanische Drucksensorvorrichtung und ein entsprechendes Herstellungsverfahren.

### Stand der Technik

Obwohl auch beliebige mikromechanische Bauelemente anwendbar sind, werden die vorliegende Erfindung und die ihr zugrundeliegende Problematik anhand von Bauelementen auf Siliziumbasis erläutert.

Aus der DE 10 2008 041 937 A1 ist eine mikromechanische Drucksensorvorrichtung bekannt, deren Herstellung mit Verfahren der Dünnschichttechnik auf einem Substratwafer aus Silizium erfolgt. Die bekannte Drucksensorvorrichtung umfasst ein Substrat, eine Membran und eine Zwischenschicht, wobei die Membran in Abhängigkeit einer Kraftwirkung auf die Membran zumindest in Teilbereichen der Membran relativ zum Substrat beweglich vorgesehen ist. Die Membran und die Zwischenschicht sind im Bereich einer Kontaktfläche in mechanischem Kontakt miteinander trennbar, wobei in Abhängigkeit der Kraftwirkung auf die Membran eine Größenveränderung der Kontaktfläche vorgesehen ist. Die Membran und die Zwischenschicht sind mit dem Substrat verbunden.

Zur Herstellung der bekannten mikromechanischen Drucksensorvorrichtung werden in vorgegebenem Wechsel funktionale Schichten abgeschieden und durch Ätzen strukturiert, sodass definierte Strukturen entstehen. Der Aufbau erfolgt vollständig auf einem Wafer. Ein wesentlicher Punkt dabei ist das Freistellen der Membran durch das Entfernen einer Opferschicht sowie das darauffolgende Verschließen der Membran mit einer Verschlussschicht. Hierbei entsteht eine geschlossene Kavität. Der Druck, der beim Verschließen der Membran in der Kavität eingeschlossen wird, ist durch die Prozessparameter beim Abscheiden der Verschlussschicht bedingt und kann nicht beliebig eingestellt werden.

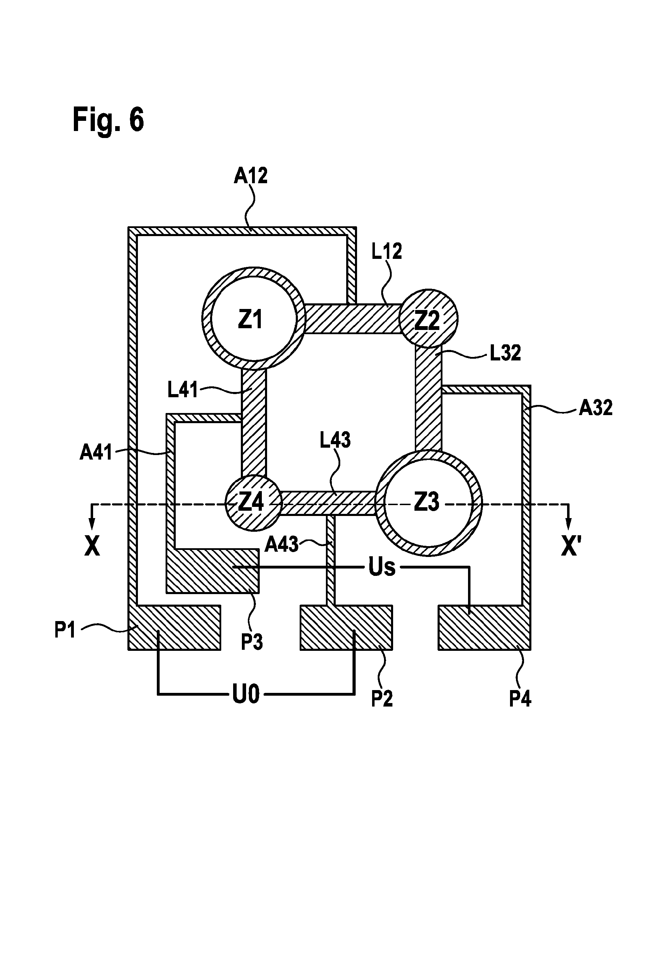

Fig. 6 ist eine schematische Schaltungsdarstellung zur Erläuterung des elektrischen Auswerteprinzips der aus der DE 10 2008 041 937 A1 bekannten mikromechanischen Drucksensorvorrichtung.

In Fig. 6 bezeichnen Bezugszeichen Z1, Z3 zwei aus der DE 10 2008 041 937 A1 bekannte Membranwiderstände, wobei Bezugszeichen Z2, Z4 zwei feste Widerstände bezeichnen. Die Widerstände Z1 bis Z4 sind mittels Leiterbahnen L12, L32, L43, L41 verbunden. Durch Anlegen einer Versorgungsspannung U0 ausgehend von Anschlusspads P1, P2 über Anschlussleitungen A12, A43 lässt sich aus den Widerständen Z1 bis Z4 eine Wheatstone-Brücke bilden, wobei ein Sensorsignal in Form einer Spannung US an den Anschlusspads P3, P4 abgreifbar ist, welche über Anschlussleitungen A41, A32 mit den Leiterbahnen L41 bzw. L32 verbunden sind.

Der Wert der Widerstände Z2, Z4 ist dabei vom Druck unabhängig, wohingegen der Wert der Widerstände Z1, Z3 vom Druck abhängig ist. In den Kavitäten unter der Membranwiderstände Z1, Z3 ist ein Druck pₖ eingeschlossen. Ist dieser Druck pₖ geringer als der zu messende Druck, so wird die jeweilige Membran durch den äußeren Druck in die Kavität gedrückt und berührt damit die Kontaktfläche der unteren Elektrode. Diese Kontaktfläche wird umso größer, je größer der äußere Druck ist. Der elektrische Widerstand zwischen den entsprechenden Elektroden verringert sich dementsprechend, wenn der äußere Druck steigt. Über die Wheatstone-Brücke wird diese Widerstandsänderung in das Sensorsignal in Form der Spannung US umgewandelt.

Die Schnittlinie X-X' dient später zur Erläuterung der Darstellung von Ausführungsformen der vorliegenden Erfindung, wo die entsprechenden Widerstände als R3 und R4 bezeichnet werden.

### Offenbarung der Erfindung

Die Erfindung schafft eine mikromechanische Drucksensorvorrichtung nach Anspruch 1 und ein entsprechendes Herstellungsverfahren nach Anspruch 11.

Bevorzugte Weiterbildungen sind Gegenstand der jeweiligen Unteransprüche.

### Vorteile der Erfindung

Die der vorliegenden Erfindung zugrunde liegende Idee besteht in einem Zwei-Substrat-Ansatz für die Herstellung einer mikromechanischen Drucksensorvorrichtung. Dabei werden die Wafer bei der Herstellung in einem Waferbondverfahren miteinander verbunden. Auf der zweiten Vorderseite des zweiten Substrats wird der Membranwiderstandsbereich definiert und auf der ersten Vorderseite des ersten Substrats wird die Gegenelektrode definiert, welche zusammen mit dem Membranwiderstandsbereich nach dem Bonden die Kavität bildet. Gegenelektrode und Membran bilden einen Bereich dessen Widerstand druckabhängig ist. Dieser Bereich soll im Folgenden Membranwiderstandsbereich bzw. membranartiger Widerstandsbereich genannt werden. Durch den Zwei-Substrat-Ansatz entfallen die Notwendigkeit einer Opferschicht zur Herstellung des Membranwiderstandsbereichs und die damit verbundenen technologischen Schwierigkeiten. Der Verschluss der Kaverne der Drucksensorvorrichtung erfolgt unmittelbar beim Bonden der beiden Substrate. Dabei ist das Einstellen eines quasi beliebigen aber definierten Drucks pₖ möglich. Bevorzugter Wert für pₖ in der Anwendung als Absolutdrucksensor mit geringer Temperaturdrift ist ein Wert von 1 Pa. Im Gegensatz dazu ist bei der bekannten Drucksensorvorrichtung der Druck pₖ vorgegeben durch die Anforderung des Prozesses zum Verschließen der Kavität, der typischerweise bei 250 Pa liegt und dadurch eine erhöhte Temperaturdrift hervorruft. Neben dem geringeren Minimaldruck ist es durch die Erfindung ebenfalls möglich, andere definierte Drücke pₖ einzustellen, zum Beispiel Normaldruck von 101325 Pa bei 273,15 K, was für einen barometrischen Drucksensor von Vorteil ist. Bei Bedarf ist es möglich, pₖ auf Werte zwischen ca. 1 Pa und 150000 Pa einzustellen.

Gemäß einer alternativen Ausführungsform umfasst die mikromechanische Drucksensorvorrichtung ein erstes Substrat mit einer ersten Vorderseite und einer ersten Rückseite. Ferner umfasst die mikromechanische Drucksensorvorrichtung eine in dem ersten Substrat ausgebildete Wanne, wobei in der Wanne eine erste Elektrode ausgebildet ist, welche sich über die Wanne hinaus in eine Peripherie der Wanne auf der erste Vorderseite erstreckt und ein zweites Substrat mit einer zweiten Vorderseite und einer zweiten Rückseite. Das zweite Substrat umfasst eine in dem zweiten Substrat ausgebildete erste Durchgangsöffnung, wobei die erste Durchgangsöffnung an der zweiten Vorderseite von einem membranartigen ersten Widerstandsbereich überspannt ist, wobei die erste Vorderseite und die zweite Vorderseite derart über eine Bondverbindung miteinander verbunden sind, dass der erste Widerstandsbereich die erste Elektrode zum Bilden einer Kaverne mit vorbestimmter Druckatmosphäre verschließt und in der Peripherie der Wanne die erste Elektrode elektrisch kontaktiert und wobei der erste Widerstandsbereich durch Anlegen von Druck durch die Durchgangsöffnung in die Wanne auslenkbar ist, so dass er die erste Elektrode innerhalb der Wanne elektrisch kontaktiert.

Gemäß einer alternativen Ausführungsform eines Herstellungsverfahrens für eine mikromechanische Drucksensorvorrichtung umfasst diese die Schritte:
Bilden von einem ersten Substrat mit einer ersten Vorderseite und einer ersten Rückseite, in dem eine Wanne ausgebildet ist, wobei in der Wanne eine erste Elektrode ausgebildet ist, welche sich über die Wanne hinaus in eine Peripherie der Wanne auf der erste Vorderseite erstreckt;

Bilden von einem zweiten Substrat mit einer zweiten Vorderseite und einer zweiten Rückseite , in dem eine erste Durchgangsöffnung ausgebildet ist, wobei die erste Durchgangsöffnung an der zweiten Vorderseite von einem membranartigen ersten Widerstandsbereich überspannt ist;

Verbinden der ersten Vorderseite und der zweiten Vorderseite über eine Bondverbindung derart miteinander, dass der erste Widerstandsbereich die erste Elektrode zum Bilden einer Kaverne mit vorbestimmter Druckatmosphäre verschließt und in der Peripherie der Wanne die erste Elektrode elektrisch kontaktiert; und wobei der erste Widerstandsbereich durch Anlegen von Druck durch die Durchgangsöffnung in die Wanne auslenkbar ist, so dass er die erste Elektrode innerhalb der Wanne elektrisch kontaktiert.

Gemäß einer weiteren bevorzugten Weiterbildung umfasst das erste Substrat zumindest bereichsweise eine dielektrische Schicht und die dielektrische Schicht fungiert als Ätzstoppschicht. So lässt sich das erste Substrat auf einfache Art und Weise strukturieren. Die dielektrische Schicht kann Siliziumdioxid umfassen. Mit anderen Worten umfasst das erste Substrat eine SOI-Wafersubstrat. So lässt sich das erste Substrat in Devicelayer, dielektrische Schicht und Handelwafer unterteilen, wobei mittels der dielektrischen Schicht ein Strukturieren des Devicelayers und des Handelslayers besonders zeitsparend durchgeführt werden kann. Insbesondere kann das Devicelayer thermisch oxidiert werden, wobei eine sich bildende Siliziumdioxidschicht zum kostensparenden und zeitsparenden Bonden des zweiten Substrats geeignet sein kann. Gemäß einer weiteren bevorzugten Weiterbildung ist die Bondverbindung auf eine auf der Vorderseite thermisch aufgewachsene erste Oxidschicht zurückführbar. Die erste Oxidschicht wächst insbesondere auf freiliegende Flächen des ersten Substrats auf. Das erste Substrat kann beispielsweise ein Silizium umfassen. Somit kann auf ein Ausbilden einer weiteren Oxidschicht auf dem zweiten Substrat verzichtet werden.

Gemäß einer weiteren bevorzugten Weiterbildung umfasst die Bondverbindung mindestens eine Oxidschicht oder Siliziumoxidschicht. So lässt sich eine stabile Bondverbindung herstellen.

Gemäß einer weiteren bevorzugten Weiterbildung weist das erste Substrat zwei Durchkontaktierungen zum elektrischen Kontaktieren der elektrischen Anschlüsse des ersten Widerstandsbereichs von der ersten Rückseite auf. So lässt sich eine stabile Kontaktierung schaffen.

Gemäß einer weiteren bevorzugten Weiterbildung ist eine zweite Elektrode auf der ersten Vorderseite des ersten Substrats mit Abstand zur ersten Elektrode ausgebildet, wobei auf der zweiten Vorderseite des zweiten Substrats ein zweiter Widerstandsbereich mit Abstand zum ersten Widerstandsbereich ausgebildet ist und wobei die erste Vorderseite des ersten Substrats und die zweite Vorderseite des zweiten Substrats derart über die Bondverbindung miteinander verbunden sind, dass sich der dabei gebildete zweite Widerstandsbereich der zweiten Elektrode druckunabhängig verhält. Mit anderen Worten kann es sich bei dem zweiten Widerstandsbereich und der zweiten Elektrode um eine Referenzelektrode handeln. Dies ermöglicht die Bildung eines Referenzwiderstandes für eine Brückenschaltung.

Gemäß einer weiteren bevorzugten Weiterbildung weist das erste Substrat zwei weitere Durchkontaktierungen zum elektrischen Kontaktieren der elektrischen Anschlüsse des zweiten Widerstandbereichs von der ersten Rückseite auf. So lässt sich ebenfalls eine stabile Kontaktierung schaffen.

Gemäß einer weiteren bevorzugten Weiterbildung ist die dielektrische Schicht jeweils durch Durchgangslöcher durchbrochen. So lassen sich effizient die hier beschriebenen Durchkontaktierungen bereitstellen. Mittels der Durchkontaktierungen kann insbesondere die zweite Vorderseite einfach elektrisch kontaktiert werden.

Gemäß einer weiteren bevorzugten Weiterbildung umfassen die Durchkontaktierungen zumindest bereichsweise metallische Kontakte, wobei diese auf einer dem zweiten Substrat abgewandten Seite des ersten Substrats angeordnet sind. So lassen sich die metallische Kontakte auf einfache Art und Weise vor beispielsweise hohen Temperaturen schützen. Dies kann insbesondere vorteilhaft bei einem Brennraumdruckmesser sein.

Gemäß einer weiteren bevorzugten Weiterbildung ist in dem zweiten Substrat eine Durchgangsöffnung ausgebildet, welche an der zweiten Vorderseite von dem ersten Widerstandsbereich überspannt ist. So ist der erste Widerstandsbereich von der zweiten Rückseite her zugänglich.

Gemäß einer weiteren bevorzugten Weiterbildung ist in dem zweiten Substrat eine weitere Durchgangsöffnung ausgebildet, welche an der zweiten Vorderseite von dem zweiten Widerstandsbereich überspannt ist. So ist der zweite Widerstandsbereich von der zweiten Rückseite her zugänglich.

Gemäß einer weiteren bevorzugten Weiterbildung ist der zweite Widerstandsbereich über Leiterbahnabschnitte welche insbesondere durch die zweite Durchgangsöffnung verlaufen können, von der zweiten Rückseite elektrisch kontaktierbar. Dies ermöglicht eine einfache Verschaltung des zweiten Widerstandsbereichs.

Gemäß einer weiteren bevorzugten Weiterbildung ist der zweite Widerstandsbereich über Leiterbahnabschnitte von der zweiten Rückseite elektrisch kontaktierbar. Dies ermöglicht eine einfache Verschaltung des zweiten Widerstandsbereichs.

Gemäß einer weiteren bevorzugten Weiterbildung weist das erste Substrat eine Druckzugangsöffnung auf, welche einen Druckzugang zur Kavität von der ersten Rückseite her bildet. So lässt sich ein Differenzdrucksensor realisieren.

Gemäß einer weiteren bevorzugten Weiterbildung ist auf der ersten Elektrode eine elektrisch leitfähige Zwischenschicht ausgebildet. Dies dient zweckmäßigerweise zum Einstellen eines gewünschten Arbeitswiderstands. Bevorzugter Wertebereich des Arbeitswiderstandes ist der Bereich zwischen 500 Ohm und 500 kOhm.

Gemäß einer weiteren bevorzugten Weiterbildung ist auf der zweiten Elektrode eine elektrisch leitfähige Zwischenschicht ausgebildet. Dies dient ebenfalls zweckmäßigerweise zum Einstellen eines gewünschten Arbeitswiderstands. Bevorzugter Wertebereich des Arbeitswiderstandes ist der Bereich zwischen 500 Ohm und 500 kOhm.

Gemäß einer weiteren bevorzugten Weiterbildung umfasst die Bondverbindung mindestens eine Oxidschicht. So lässt sich eine stabile Bondverbindung herstellen.

Gemäß einer weiteren bevorzugten Weiterbildung umfassen das erste Substrat und/oder das zweite Substrat jeweils ein SOI-Wafersubstrat oder Wafersubstrat. So sind Standard-Halbleiterprozesse zur Strukturierung anwendbar.

Gemäß einer weiteren bevorzugten Weiterbildung ist der erste Widerstandsbereich über Leiterbahnabschnitte, welche insbesondere durch die erste Durchgangsöffnung verlaufen können, von der zweiten Rückseite elektrisch kontaktierbar. Dies ermöglicht eine Verschaltung des ersten Widerstandsbereichs.

Gemäß einer weiteren bevorzugten Weiterbildung ist der erste Widerstandsbereich über Leiterbahnabschnitte von der zweiten Rückseite elektrisch kontaktierbar. Dies ermöglicht eine Verschaltung des ersten Widerstandsbereichs.

Gemäß einer weiteren bevorzugten Weiterbildung erfolgen das Bilden der Wanne von der ersten Vorderseite des ersten Substrats und das Bilden des ersten Widerstandsbereichs von der zweiten Rückseite des zweiten Substrats. So lässt sich die erste Oxidschicht als Bondschicht und als weitere Ätzstoppschicht einsetzen.

Gemäß einer weiteren bevorzugten Weiterbildung wird zum Verbinden über die Bondverbindung eine erste Oxidschicht auf der ersten Vorderseite und eine zweite Oxidschicht auf der zweiten Vorderseite gebildet, welche in einem Hochtemperaturschritt miteinander verbunden werden.

Gemäß einer weiteren bevorzugten Weiterbildung wird zum Verbinden über die Bondverbindung eine erste Oxidschicht an der ersten Vorderseite des ersten Substrats gebildet und mittels der ersten Oxidschicht wird das erste Substrat mit dem zweiten Substrat in dem Hochtemperaturschritt miteinander verbunden.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
- Fig. 1: eine schematische Querschnittsansicht zur Erläuterung einer mikromechanischen Drucksensorvorrichtung gemäß einer ersten Ausführungsform der vorliegenden Erfindung;
- Fig. 2a)-e): schematische Querschnittsansichten zur Erläuterung eines Herstellungsverfahrens eines ersten Substrats der mikromechanischen Drucksensorvorrichtung gemäß der ersten Ausführungsform der vorliegenden Erfindung;
- Fig. 3a)-e): schematische Querschnittsansichten zur Erläuterung eines Herstellungsverfahrens eines zweiten Substrats der mikromechanischen Drucksensorvorrichtung gemäß der ersten Ausführungsform der vorliegenden Erfindung;
- Fig. 4: eine schematische Querschnittsansicht zur Erläuterung einer mikromechanischen Drucksensorvorrichtung gemäß einer zweiten Ausführungsform der vorliegenden Erfindung;
- Fig. 5: eine schematische Querschnittsansicht zur Erläuterung einer mikromechanischen Drucksensorvorrichtung gemäß einer dritten Ausführungsform der vorliegenden Erfindung;
- Fig. 6: eine schematische Schaltungsdarstellung zur Erläuterung des elektrischen Auswerteprinzips der aus der DE 10 2008 041 937 A1 bekannten mikromechanischen Drucksensorvorrichtung.
- Fig. 7: eine schematische Querschnittsansicht zur Erläuterung einer mikromechanischen Drucksensorvorrichtung gemäß einer vierten Ausführungsform der vorliegenden Erfindung;

- Fig. 8a)-h): schematische Querschnittsansichten zur Erläuterung eines Herstellungsverfahrens der mikromechanischen Drucksensorvorrichtung gemäß der vierten Ausführungsform der vorliegenden Erfindung; und
- Fig. 9: ein Flussdiagramm zur Erläuterung des Herstellungsverfahrens der mikromechanischen Drucksensorvorrichtung gemäß der vierten Ausführungsform der vorliegenden Erfindung.

### Ausführungsformen der Erfindung

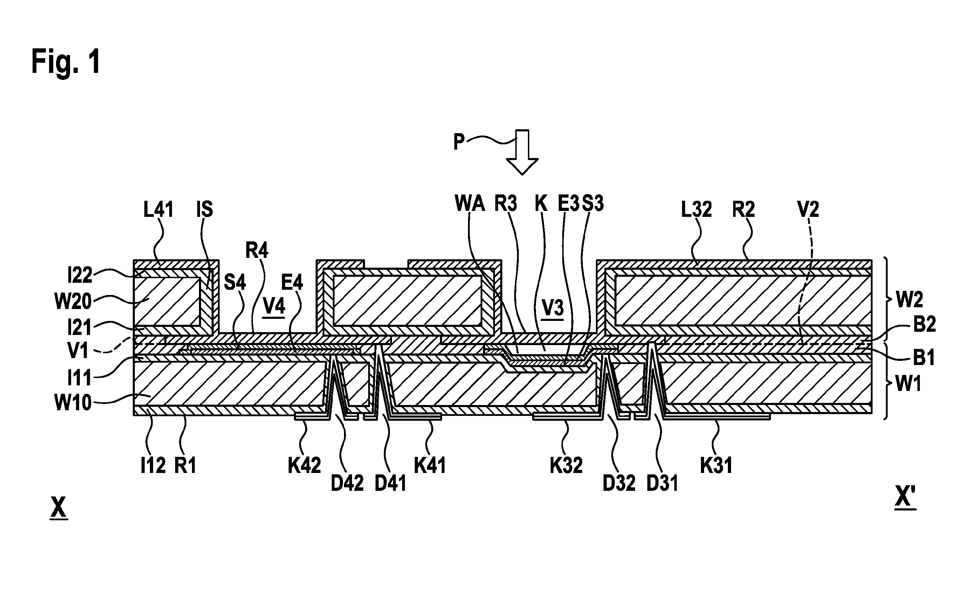

In den Figuren bezeichnen gleiche Bezugszeichen gleiche bzw. funktionsgleiche Elemente. Die Darstellung in Fig. 1, 4, 5 und 7 entspricht dem Schnitt X-X' in Fig. 6.

Fig. 1 ist eine schematische Querschnittsansicht zur Erläuterung einer mikromechanischen Drucksensorvorrichtung gemäß einer ersten Ausführungsform der vorliegenden Erfindung.

In Fig. 1 bezeichnet Bezugszeichen W1 ein erstes Substrat mit einer ersten Vorderseite V1 und einer ersten Rückseite R1. Das erste Substrat W1 umfasst ein Wafersubstrat W10 aus Silizium, Glas, Keramik u.ä. An der Vorderseite V1 des ersten Substrats W1 ist eine erste Isolationsschicht I11 und an der Rückseite R1 eine zweite Isolationsschicht I12 vorgesehen.

Eine Wanne WA ist an der Vorderseite V1 des ersten Substrats W1 ausgebildet, wobei in der Wanne WA eine erste Elektrode E3 vorgesehen ist, welche sich über die Wanne WA hinaus in eine Peripherie der Wanne WA auf der ersten Vorderseite V1 erstreckt. Auf der ersten Elektrode E3 ist eine hochohmige elektrisch leitfähige Zwischenschicht S3 ausgebildet, welche zum Definieren eines Arbeitswiderstandes verwendet wird.

Auf der Vorderseite V1 ist eine zweite Elektrode E4 in Abstand zur ersten Elektrode E3 ausgebildet, auf der ebenfalls eine hochohmige Zwischenschicht S4 zum Definieren eines Arbeitswiderstandes gebildet ist.

In Fig. 1 bezeichnet Bezugszeichen W2 ein zweites Substrat mit einer zweiten Vorderseite V2 und einer zweiten Rückseite R2. Das zweite Substrat W2 weist ebenfalls ein Wafersubstrat W20 aus Silizium, Glas, Keramik o.ä. auf, wobei an der zweiten Vorderseite V2 eine dritte Isolationsschicht I21 und an der zweiten Rückseite R2 eine vierte Isolationsschicht I22 vorgesehen ist. Im Falle von Siliziumwafersubstraten W10, W20 sind die Isolationsschichten I11, I12, I21, I22 vorzugsweise aus Siliziumdioxid hergestellt.

In dem zweiten Substrat W2 ist eine erste Durchgangsöffnung V3 ausgebildet, die an der zweiten Vorderseite V2 von einem membranartigen ersten Widerstandsbereich R3 überspannt ist. Weiterhin weist das zweite Substrat W2 eine zweite Durchgangsöffnung V4 auf, welche an der zweiten Vorderseite von einem zweiten Widerstandsbereich R4 überspannt ist, welcher nicht membranartig ist, da er auf der Zwischenschicht S4 angebracht ist. Die Membrandicke der Widerstandsbereiche R3, R4 weisen typischerweise eine Dicke von 50 Nanometer bis 5 Mikrometer auf.

Weiterhin weist das erste Substrat W1 an seiner Vorderseite V1 eine erste Bondschicht B1 auf, wohingegen das zweite Substrat W2 an der zweiten Vorderseite V2 eine zweite Bondschicht B2 aufweist. Die beiden Bondschichten B1 und B2 sind beim vorliegenden Ausführungsbeispiel aus einem Siliziumdioxid gebildet.

In einem Hochtemperaturschritt werden die beiden Substrate W1, W2 entlang der gestrichelten Linie in Fig. 1 derart aufeinander gebondet, dass der erste Widerstandsbereich R3 die erste Elektrode E3 zum Bilden einer Kavität K mit vorbestimmter Druckatmosphäre pₖ verschließt, wobei R3 die Elektrode E3 in der Peripherie der Wanne WA elektrisch kontaktiert. Ist der durch die Durchgangsöffnung V3 angelegte äußere Druck P größer als der Druck pₖ, verändert sich der Kontaktbereich des membranartigen ersten Widerstandsbereichs R3 mit der Zwischenschicht S3 und daher der resultierende Widerstand, was zur elektrischen Druckmessung ausgenutzt wird, wie Eingangs erläutert.

Da der zweite Widerstandsbereich R4 die zweite Elektrode E4 über die Zwischenschicht S4 immer vollständig kontaktiert, ist der Kontaktbereich nicht vom angelegten externen Druck P abhängig.

Der erste Widerstandsbereich R3 ist über Leiterbahnabschnitte L32 mit dem Rest der Auswerteschaltung verbunden, also beispielsweise wie in Fig. 6 dargestellt, mit einem weiteren festen Widerstand R2. Der zweite Widerstandsbereich R4 ist über Leiterbahnabschnitte L41 mit dem Rest der Auswerteschaltung verbunden, also beispielsweise mit einem weiteren Widerstandsbereich R1, wie in Fig. 6 dargestellt. An den Seitenwänden der Durchgangsöffnungen V3, V4 ist ein Seitenwandoxid IS als Isolation vorgesehen.

Von der ersten Rückseite R1 ausgehend vorgesehen sind eine erste Durchkontaktierung K31 und eine zweite Durchkontaktierung K32, welche den ersten Widerstandsbereich R3 bzw. die erste Elektrode E3 kontaktieren. Diese Durchkontaktierungen K31, K32 verlaufen in entsprechenden Durchgangslöchern D31, D32 im ersten Substrat W1.

Weiterhin vorgesehen sind ausgehend von der ersten Rückseite R1 eine dritte Durchkontaktierung K41 und eine vierte Durchkontaktierung K42, welche den zweiten Widerstandsbereich R4 bzw. die zweite Elektrode E4 elektrisch kontaktieren. Die Durchkontaktierungen K41, K42 verlaufen in entsprechenden Durchgangslöchern D41, D42 im ersten Substrat W1.

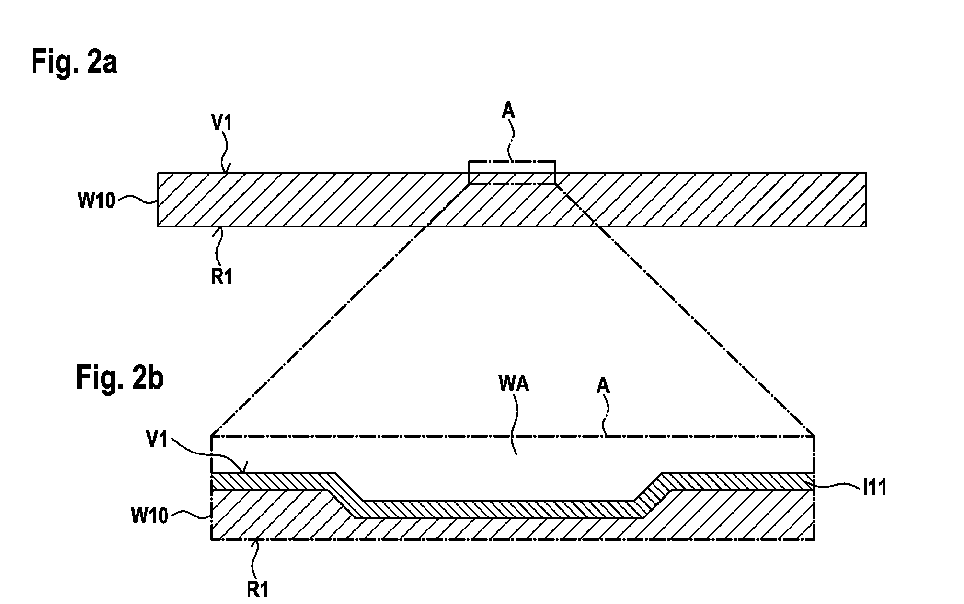

Fig. 2a)-e) zeigen schematische Querschnittsansichten zur Erläuterung eines Herstellungsverfahrens eines ersten Substrats der mikromechanischen Drucksensorvorrichtung gemäß der ersten Ausführungsform der vorliegenden Erfindung.

Gemäß Fig. 2a) wird zunächst das Wafersubstrat W10 bereitgestellt, welches im vorliegenden Fall ein Siliziumwafer ist. In Fig. 2a) bezeichnet Bezugszeichen A einen Ausschnitt, welcher in Fig. 2b) und 2c) vergrößert dargestellt ist.

Wie in Fig. 2b) dargestellt, wird eine Wanne WA auf der ersten Vorderseite V1 und darüber anschließend auf der Vorderseite V1, sowie auf der Rückseite R1 die erste und zweite Isolationsschicht I11, I12 aus Siliziumdioxid gebildet. Die Wanne WA lässt sich z.B. durch einen Trench-Ätzprozess oder auch durch einen LOCOS-Prozess herstellen.

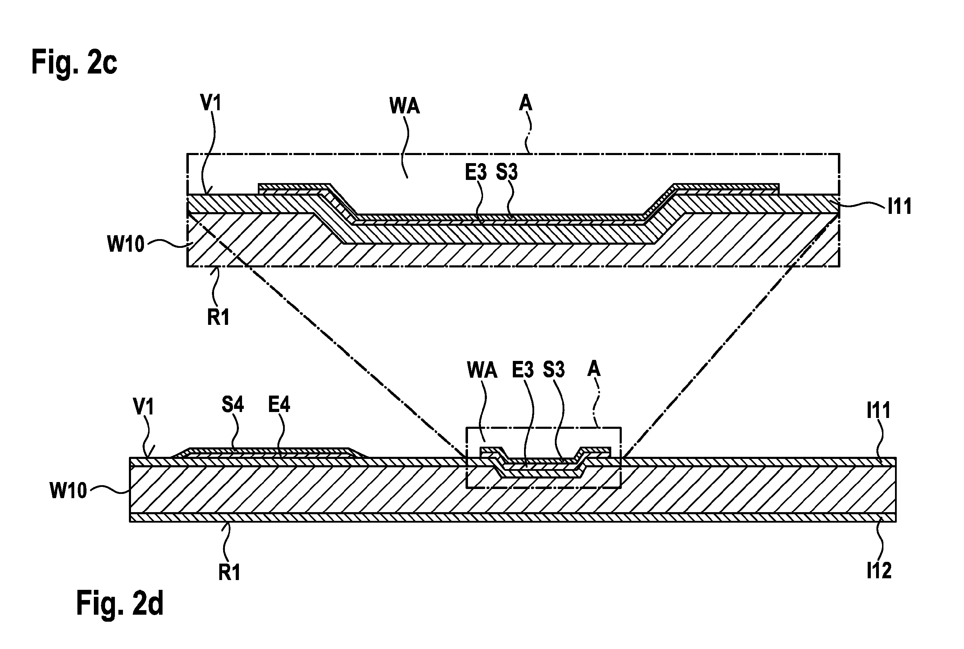

Im Anschluss daran werden gemäß Fig. 2c) die erste Elektrode E3 und die darauf befindliche hochohmige Zwischenschicht S3 in der Wanne WA und der umliegenden Peripherie gebildet. Die erste Elektrode E3 besteht beispielsweise aus dotiertem Poly-Siliziumcarbid (SiC) oder einem anderen Halbleitermaterial mit ausreichender Leitfähigkeit. Die Zwischenschicht S3 besteht beispielsweise aus amorphen SiC.

Wie in Fig. 2d) gezeigt, werden simultan die zweite Elektrode E4 ebenfalls auf der ersten Isolationsschicht I11 strukturiert sowie die darüber liegende Zwischenschicht S4.

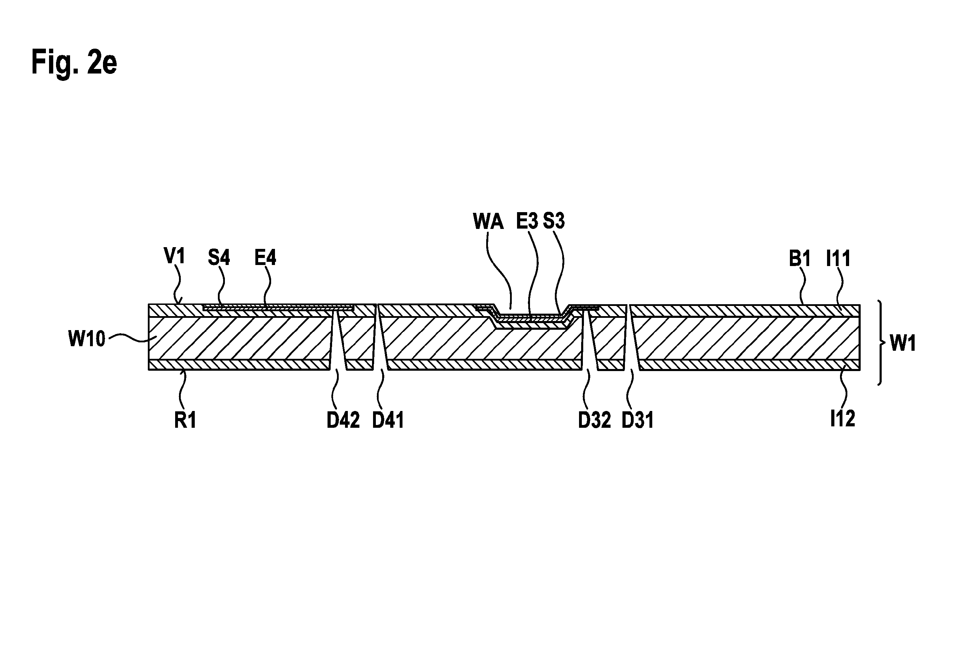

Danach wird, wie in Fig. 2e) dargestellt, die erste Bondschicht B1, die im Vorliegenden Fall beispielsweise aus CVD-Oxid besteht, an der Vorderseite V1 vorgesehen, wobei diese nicht über dem Bereich der ersten und zweiten Elektrode E3, E4 liegt. Das CVD-Oxid der ersten Bondschicht B1 kann durch einen CMP-Prozess auf die erforderliche Rauigkeit zum Bonden poliert werden.

Weiterhin veranschaulicht in Fig. 2e) ist das Anlegen der Durchgangslöcher D31, D32, D41, D42 für die Durchkontaktierungen K31, K32, K41, K42. Die Durchgangslöcher D31, D41 durchsetzen das gesamte erste Substrat W1 einschließlich der ersten Bondschicht B1.

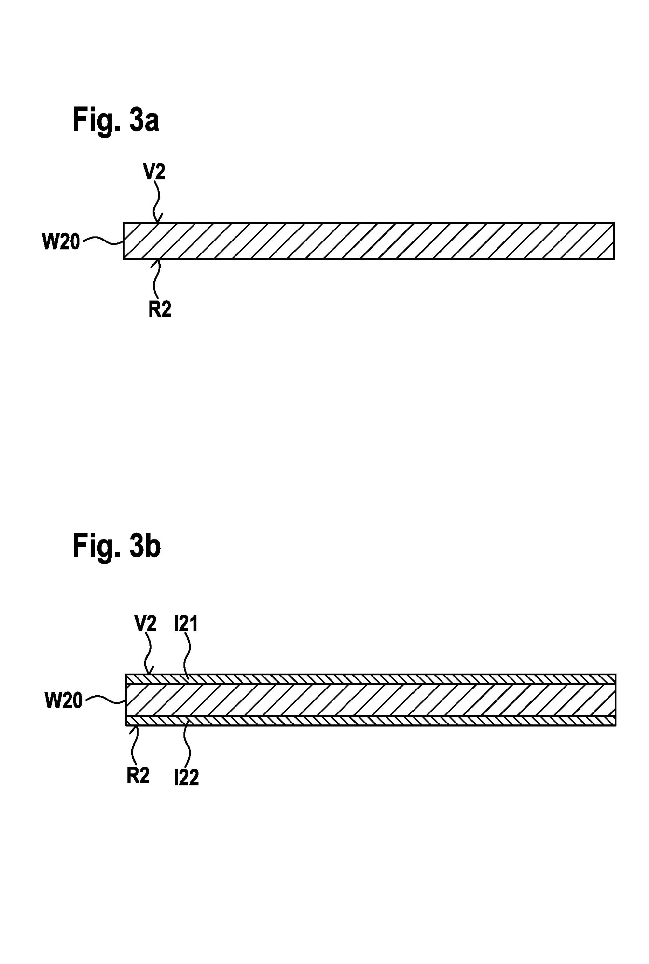

Fig. 3a)-e) zeigen schematische Querschnittsansichten zur Erläuterung eines Herstellungsverfahrens eines zweiten Substrats der mikromechanischen Drucksensorvorrichtung gemäß der ersten Ausführungsform der vorliegenden Erfindung.

Gemäß Fig. 3a) wird das zweite Wafersubstrat W20, ebenfalls ein Siliziumwafer, bereitgestellt. Im Anschluss daran werden die vorderseitige dritte Isolationsschicht I21 und die rückseitige vierte Isolationsschicht I22 gebildet, im vorliegenden Fall ebenfalls Siliziumdioxidschichten, wie in Fig. 3b) gezeigt.

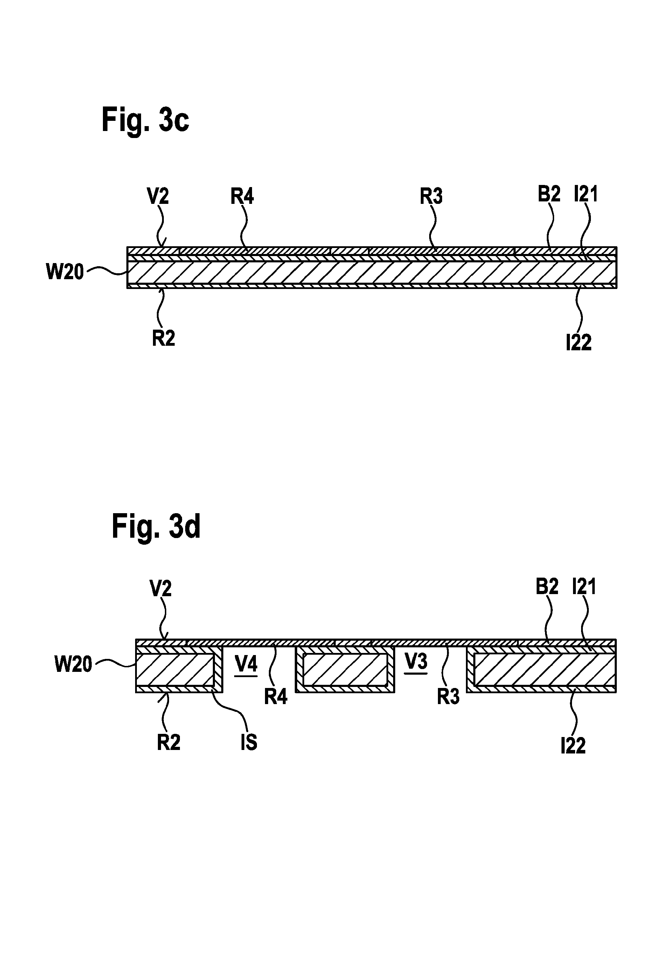

Weiter mit Bezug auf Fig. 3c) werden der erste Widerstandsbereich R3 und der zweite Widerstandsbereich R4 auf der zweiten Vorderseite abgeschieden und strukturiert. Dann wird die zweite Bondschicht B2 aus CVD-Oxid gebildet.

Im Anschluss daran erfolgt gemäß Fig. 3d) ein Trench-Ätzprozess von der zweiten Rückseite R2 aus, durch den die erste Durchgangsöffnung V3 und die zweite Durchgangsöffnung V4 gebildet werden. Zur besseren elektrischen Isolation wird an den Seitenwänden der Durchgangsöffnungen V3, V4 das Seitenwandoxid IS als Isolation vorgesehen. Der erste Widerstandsbereich R3 und der zweite Widerstandsbereich R4 überspannen somit die Durchgangsöffnungen V3 bzw. V4 an der zweiten Vorderseite V2.

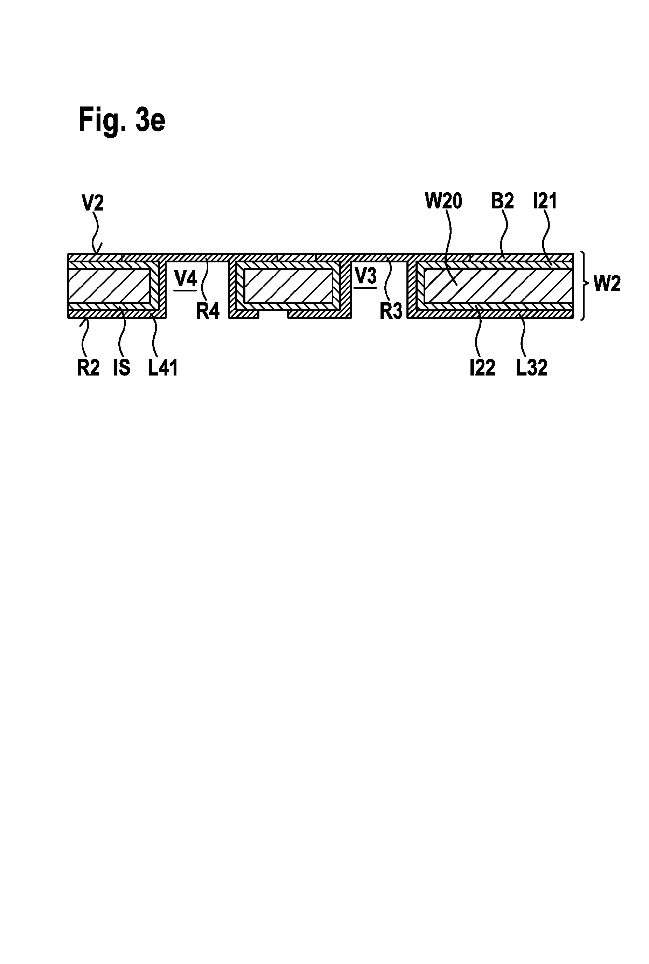

In einem weiteren Prozessschritt, der in Fig. 3e) gezeigt ist, erfolgt ein Abscheiden und Strukturieren der Leiterbahnabschnitte L32, L41.

Im Anschluss an die Prozesszustände gemäß Fig. 3e) bzw. 2e) werden die beiden Substrate W1, W2 in diesem Beispiel mit Bond-Schichten aus Siliziumoxid durch einen Hochtemperatur-Bondprozess dauerhaft und hermetisch miteinander verbunden, wobei die Kaverne K den vorbestimmten Druck pₖ einschließt.

Zuletzt werden durch Aufbringen und Strukturieren eines geeigneten Metalls, z.B. Au, W, Ti oder einer anderen Metallverbindung oder Legierung, die elektrischen Durchkontaktierungen K31, K32, K41, K42 auf der ersten Rückseite R1 realisiert.

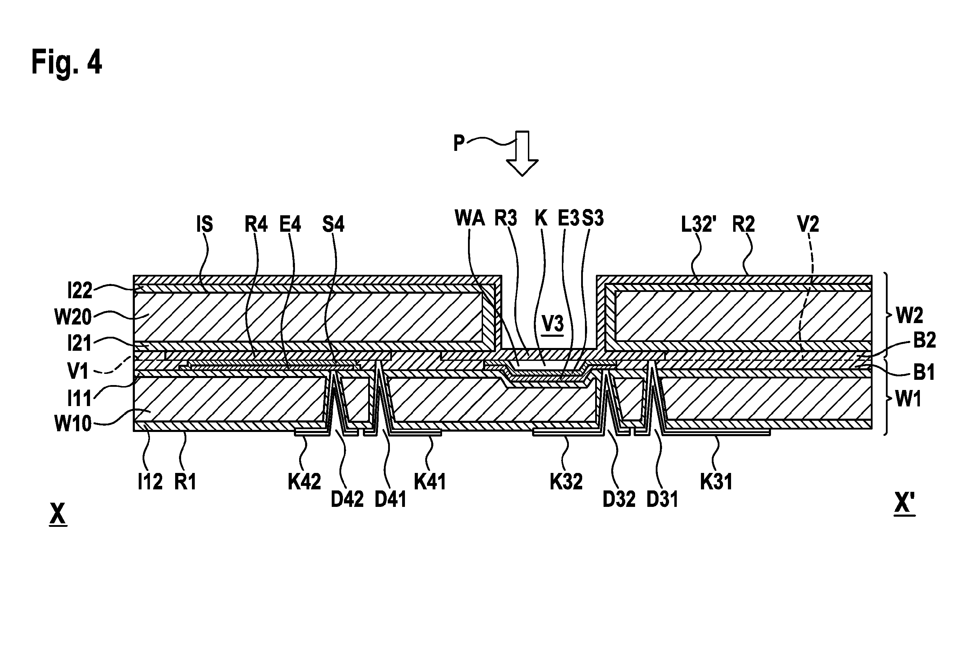

Fig. 4 ist eine schematische Querschnittsansicht zur Erläuterung einer mikromechanischen Drucksensorvorrichtung gemäß einer zweiten Ausführungsform der vorliegenden Erfindung.

Bei der zweiten Ausführungsform ist im zweiten Substrat W2 die zweite Durchgangsöffnung V4 nicht vorgesehen, und der zweite Widerstandsbereich R4 liegt auf der dritten Isolationsschicht I21 aus Siliziumdioxid.

Die Leiterbahnabschnitte zum Anschließen des zweiten Widerstandsbereichs R4 sind bei dieser Ausführungsform nicht dargestellt, sondern lediglich ein modifizierter Leiterbahnabschnitt L32' zum Anschließen des ersten Widerstandsbereichs R3.

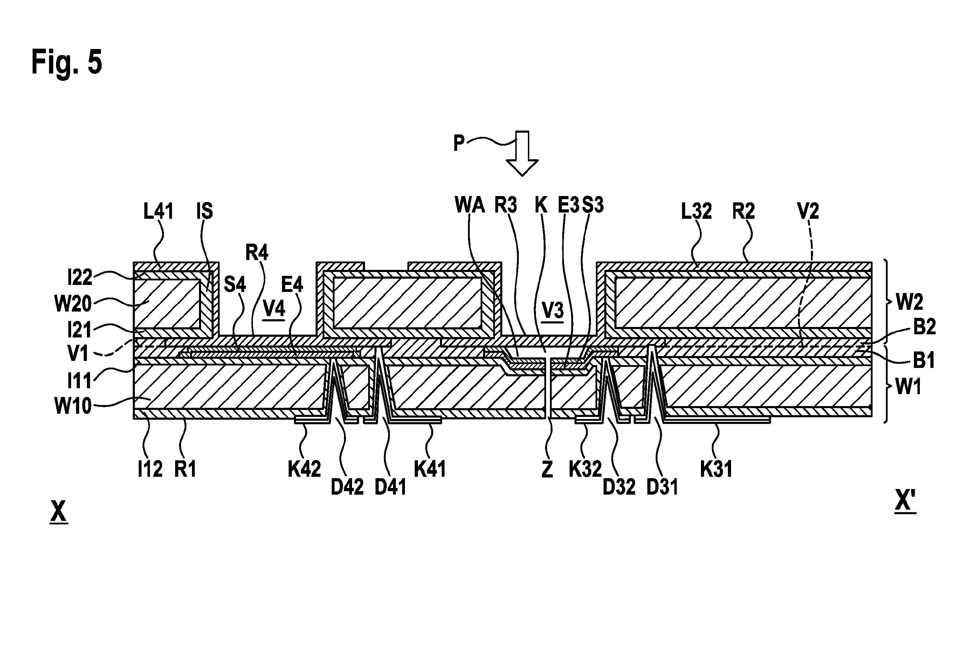

Fig. 5 ist eine schematische Querschnittsansicht zur Erläuterung einer mikromechanischen Drucksensorvorrichtung gemäß einer dritten Ausführungsform der vorliegenden Erfindung.

Bei der dritten Ausführungsform gemäß Fig. 5 ist im Unterschied zur ersten Ausführungsform gemäß Fig. 1 eine Druckzugangsöffnung Z im ersten Substrat W1 gebildet, welcher einen Druckzugang zur Kaverne K von der ersten Rückseite R1 her bildet.

Diese Ausführungsform kann als Differenzdrucksensor betrieben werden, da aufgrund der Druckzugangsöffnung Z ein Druckausgleich mit der Umgebung möglich ist. Gemessen wird in diesem Fall der Differenzdruck zwischen den Räumen auf der ersten und zweiten Rückseite R1, R2. Diese Bereiche müssen dann auf geeignete Weise voneinander isoliert werden.

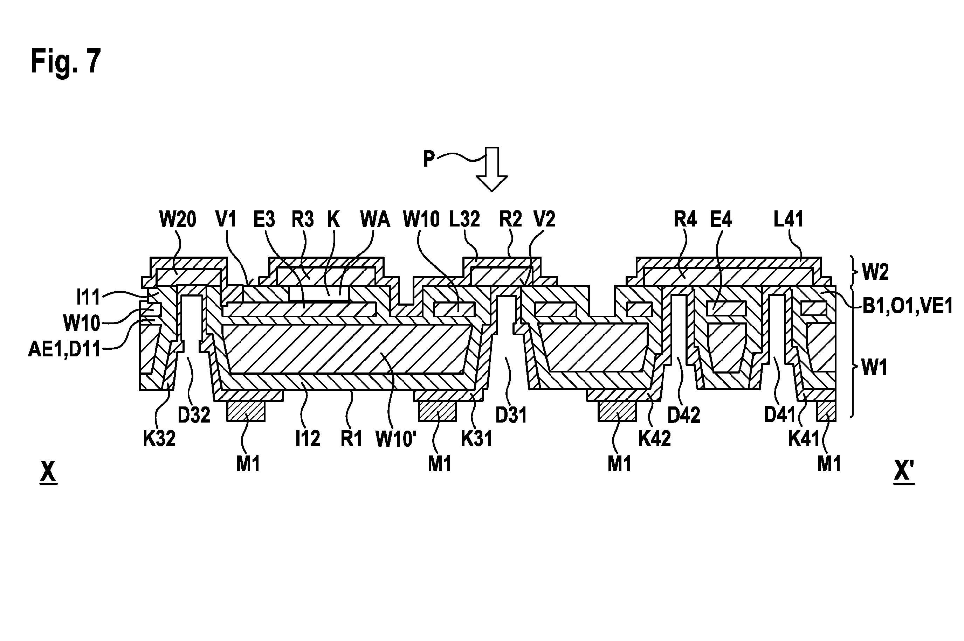

Fig.7 ist eine schematische Querschnittsansicht zur Erläuterung einer mikromechanischen Drucksensorvorrichtung gemäß einer vierten Ausführungsform der vorliegenden Erfindung.

In Fig. 7 bezeichnet Bezugszeichen W1 das erste Substrat mit der ersten Vorderseite V1 und der ersten Rückseite R1. Das erste Substrat W1 umfasst ein SOI-Wafersubstrat W10. An der Vorderseite V1 des ersten Substrats W1 ist die erste Isolationsschicht I11 und an der Rückseite R1 die zweite Isolationsschicht I12 vorgesehen. Die erste Isolationsschicht I11 und die zweite Isolationsschicht I12 umfassen ein auf thermische Oxidation zurückführbares Siliziumoxid bzw. die erste Oxidschicht O1.

Die Wanne WA ist an der Vorderseite V1 des ersten Substrats W1 ausgebildet, wobei in der Wanne WA die erste Elektrode E3 vorgesehen ist, welche sich über die Wanne W1 hinaus in die Peripherie der Wanne WA auf der ersten Vorderseite V1 erstreckt.

Auf der Vorderseite V1 ist eine zweite Elektrode E4 im Abstand zur ersten Elektrode E3 ausgebildet.

In Fig. 7 bezeichnet Bezugszeichen W2 das zweite Substrat mit der zweiten Vorderseite V2 und der zweiten Rückseite R2. Das zweite Substrat W2 kann das Wafersubstrat W20 oder ein weiteres SOI-Wafersubstrat W20 umfassen, wobei an der zweiten Vorderseite V2 keine dritte Isolationschicht I21 und an der zweiten Rückseite R2 keine vierte Isolationsschicht I22 wie in der Fig. 1 gezeigt vorgesehen ist. Im Falle des SOI-Wafersubstrats W10 umfassen die Isolationsschichten 111 und 112 thermisch oxidiertes Siliziumdioxid. Die Isolationsschicht I11 fungiert in Fig. 7 ferner als Bondverbindung B1. Mit anderen Worten ist die zweite Bondverbindung B2 wie in Fig. 1 gezeigt nicht erforderlich, um das hermetische Verschließen der Kaverne K zu gewährleisten.

Über die Bondverbindung B1 sind die erste Vorderseite V1 und die zweite Vorderseite V2 miteinander verbunden, so dass der erste membranartige Widerstandsbereich R3 die erste Elektrode E3 zum Bilden der Kaverne K mit vorbestimmter Druckatmosphäre verschließt und in der Peripherie der Wanne WA die erste Elektrode elektrisch kontaktiert. Hierbei ist der erste Widerstandsbereich R3 durch Anlegen von dem Druck P in die Wanne WA auslenkbar, so dass er die erste Elektrode E3 innerhalb der Wanne WA elektrisch kontaktiert.

Mit anderen Worten ist in der vierten Ausführungsform der mikromechanischen Drucksensorvorrichtung die Wanne WA integraler Bestandteil des ersten Substrats W1. Das heißt, dass zum Ausbilden der Widerstandsbereiche R3, R4 im Gegensatz zu Fig. 1 in dem zweiten Substrat W2 keine Durchgangsöffnungen V3, V4 ausgebildet sein müssen, sondern das zweite Substrat W2 insbesondere die Kaverne K verschließt und zum Aufbringen der entsprechender Leiterbahnen L41, L32 vorgesehen ist. So lassen sich Verfahrensschritte einsparen, wodurch das Herstellungsverfahren zu der vierten Ausführungsform zeit- und kostensparend ist.

Ferner umfasst das erste Substrat W1 zumindest bereichsweise eine dielektrische Schicht D11, wobei die dielektrische Schicht D11 als eine Ätzstoppschicht AE1 während dem Strukturen des ersten Substrats W1 fungiert.

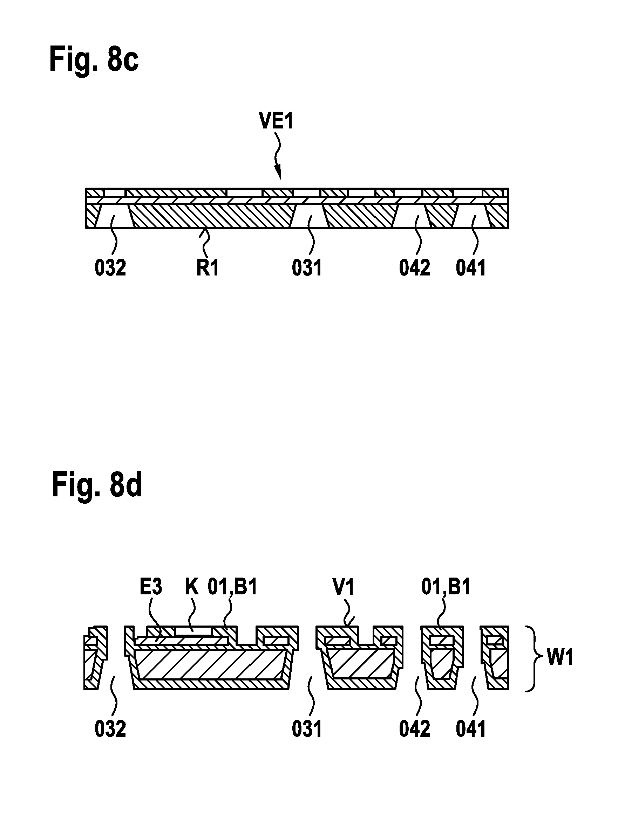

In Fig. 7 ist die Isolationsschicht 11 bzw. die Bondverbindung B1 wie bereits beschrieben eine thermisch aufgewachsene erste Oxidschicht O1. Des Weiteren wird eine geringe Sensortopographie erzielt und damit reduziert sich ein Risiko hinsichtlich Verrußung, Ablagerungen von Partikeln bzw. Schichten während des Betriebs sowie ein Drift der mikromechanischen Drucksensoranordnung kann reduziert werden. Ferner können freiliegende Oberflächen der vierten Ausführungsform ausschließlich durch Siliziumcarbid oder Siliziumdioxid vor Korrosion geschützt werden. Des Weiteren sind durch den Einsatz der hier beschriebenen SOI-Wafersubstrate extrem glatte Oberflächen der mikromechanischen Drucksensorvorrichtung realisierbar, wodurch wenig Rauschen und hohe Reproduzierbarkeit des Sensorsignals gewährleistet werden können. Ferner wird in der vierten Ausführungsform der mikromechanischen Drucksensorvorrichtung ein entsprechender Durchkontaktprozess vereinfacht (siehe Fig. 8c bzw. 8d).

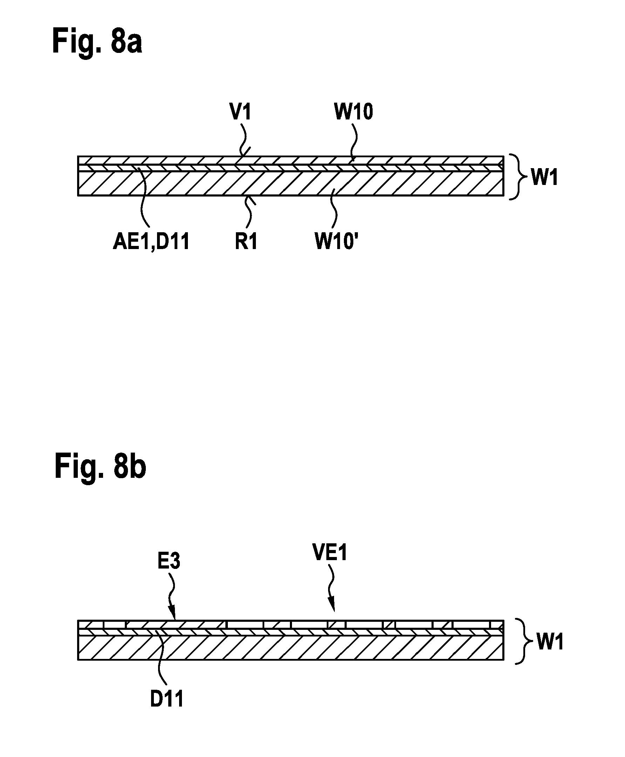

Fig. 8a)-h) sind schematische Querschnittsansichten zur Erläuterung eines Herstellungsverfahrens der mikromechanischen Drucksensorvorrichtung gemäß der vierten Ausführungsform der vorliegenden Erfindung.

In dem in Fig. 8a dargestellten Verfahrensschritt wird das erste Substrat W1 mit der ersten Vorderseite V1 und der ersten Rückseite R1 bereitgestellt. Das erste Substrat W1 in Fig. 8a umfasst ein SOI-Wafersubstrat W10 und weist die dielektrische Schicht D11, welche während des Verfahrens als Ätzstoppschicht AE1 fungiert, auf. Mit anderen Worten umfasst das erste Substrat W1 eine Schicht W10, die dielektrische Schicht D11 , beispielsweise Siliziumdioxid, und eine Trägerschicht W10'. Die Schicht W10 ist an der ersten Vorderseite V1 ausgebildet, die Trägerschicht W10' bildet hierbei die erste Rückseite R1 aus. Die dielektrische Schicht D11 bzw. Ätzstoppschicht AE1 ist zwischen dem Schicht W10 und dem Trägerschicht W10' derart angeordnet, dass die Trägerschicht W10', die durch dieses Verfahren hergestellte mikromechanische Drucksensorvorrichtung mechanisch stabilisiert. Die erste Vorderseite V1 der Schicht W10 weist eine geringe Rauigkeit Ra von kleiner 50 Å bezogen auf eine Fläche von 4 µm² auf.

Die Schicht W10 und die Trägerschicht W10' umfassen Silizium.

Diese geringe Rauigkeit kann insbesondere durch ein Polieren erzielt werden. Die Schicht W10 ist elektrisch leitend und führt selbst bei Hochtemperaturschritten von größer 800°C keine morphologischen Umwandlungen durch. Die Schicht W10 umfasst hierbei eine Dicke von 0,2 Mikrometer bis 10 Mikrometer. Die dielektrische Schicht D11 isoliert die Schicht W10 von der Trägerschicht W10'. Die dielektrische Schicht D11 umfasst eine Dicke von 0,1 Mikrometer bis 2,5 Mikrometer.

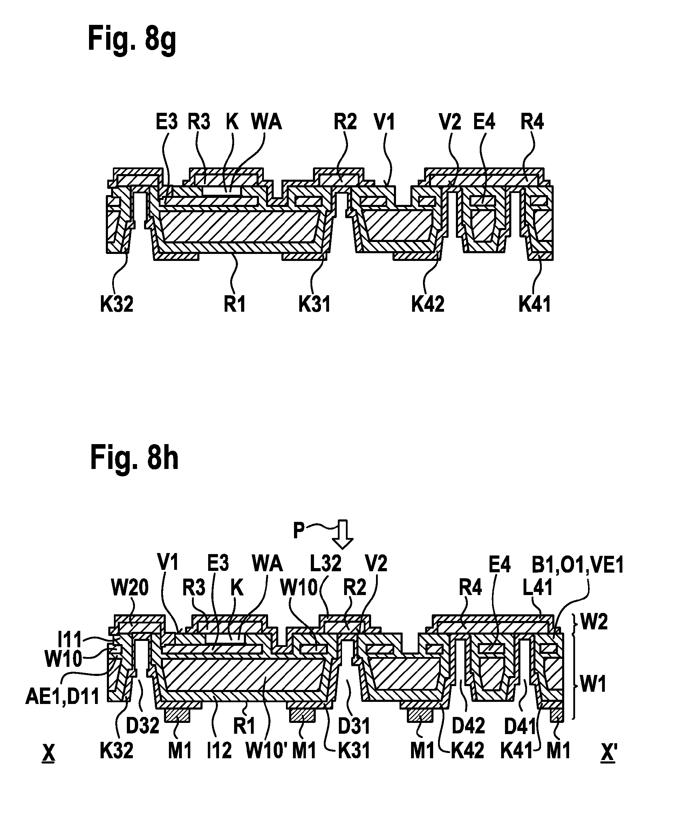

In dem in Fig. 8b dargestellten Verfahrensschritt wird das erste Substrat W1 vorderseitig strukturiert, wobei Bereiche zum Ausbilden der Elektrode E3, der Elektrode E4 und den in Fig. 8g gezeigten Leiterbahnen L41, L32 gebildet werden. Hinsichtlich der Leiterbahnabschnitte L32, L41 kann eine im späteren Verfahrensstadium hergestellte Verdrahtungsebene VE1 verstanden werden. Die Strukturierung kann insbesondere mittels RIE (Reactive Ion Etching) durchgeführt werden, wobei die dielektrische Schicht D11 als Ätzstoppschicht AE1 fungiert.

In Fig. 8c wird das erste Substrat W1 rückseitig strukturiert, wobei Durchgangslöcher 032, 031, 042, und 041 gebildet werden. Die Durchgangslöcher 031, 032, 041 und 042 bilden hierbei eine Basis für die späteren Durchkontaktierungen K31, K32, K41, K42, wobei diese wiederum auf den entsprechenden Durchgangslöchern D31, D32, D41 und D42 basieren. Mit anderen Worten wird die Trägerschicht W10' strukturiert, wobei auch hier die dielektrische Schicht D11 als Ätzstoppschicht AE1 fungiert.

Die Strukturierung kann insbesondere mittels DRIE (Deep Reactive Ion Etching) durchgeführt werden, wobei wie bereits oben beschrieben, die dielektrische Schicht D11 als die Ätzstoppschicht AE1 fungiert. Hierdurch wird insbesondere gewährleistet, dass das erste Substrat W1 keine Öffnungen aufweist und damit eine Rückseitenkühlung während der Fertigstellung der mikromechanischen Drucksensoranordnung ermöglicht. Ferner kommt es zu keinen ungewünschten Strukturierungen der Schicht W10. Ferner weist eine Topographie auf der ersten Vorderseite V1 geringe Aspektverhältnisse auf, so dass insbesondere weitere Vorderseiten-Lithographien nicht in ihren Eigenschaften beschränkt sind.

In dem in Fig. 8d dargestellten Verfahrensschritt wird das erste Substrat W1 thermisch oxidiert. Hierbei bilden sich an allen freiliegenden Siliziumoberflächen des ersten Substrats W1 die erste Oxidschicht O1 aus. Durch entsprechendes Strukturieren werden die Wanne WA gebildet, die Verdrahtungsebene VE1 entsprechend durch die erste Oxidschicht O1 an der ersten Vorderseite V1 isoliert und die Durchgangslöcher 031, 032, 041 und 042 durchbrochen. Die thermische Oxidation ist vorteilhaft, da eine hohe Konformität der sich ausbildenden ersten Oxidschicht O1 bzw. Siliziumdioxidschicht gewährleisten lässt. Die sich ausbildende erste Oxidschicht O1 auf der ersten Vorderseite V1 des ersten Substrats W1 dient insbesondere als die Bondverbindung B1, als elektrische Isolation zwischen den Leiterbahnen L31, L41 und den Durchkontaktierungen K31, K32, K41 und K42, definiert eine Höhe der Kaverne K und schützt des Weiteren offene Stellen der Verdrahtungsebene VE1 vor weiterer Oxidation während der Inbetriebnahme der mikromechanischen Drucksensorvorrichtung. Die erste Oxidschicht O1, welche sich auf der Trägerschicht W10' ausbildet, dient insbesondere zur elektrischen Isolation der Durchgangslöcher D31, D32, D41 und D42. Ferner stellt sie die elektrische Isolation an der ersten Rückseite R1 des ersten Substrats W1 dar.

Durch die anschließende Strukturierung der ersten Oxidschicht O1 an der ersten Vorderseite V1 des ersten Substrats W1 wird die Kaverne K gebildet, Kontaktöffnungen zu der Verdrahtungsebene VE1 gebildet und die Öffnungen 031, 032, 041 und 042 zu entsprechenden Durchgangslöchern 031, 032, 041 und 042 durchbrochen.

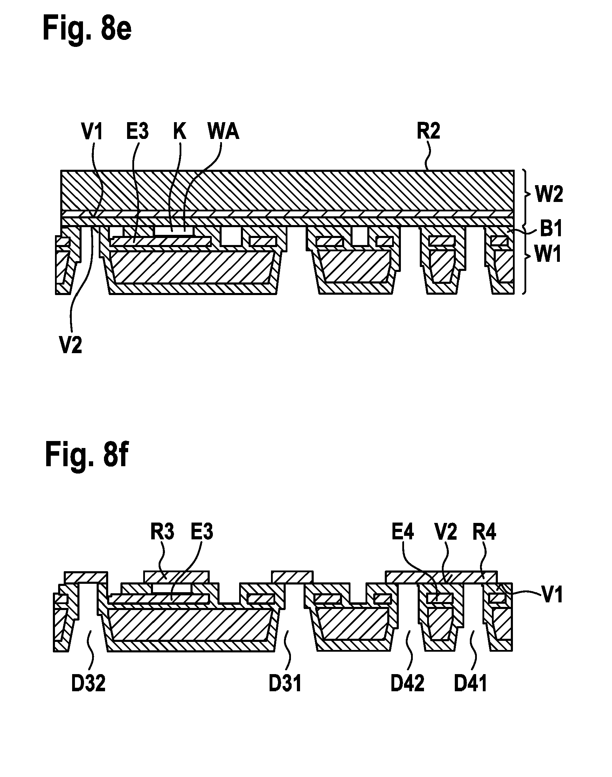

In dem in Fig. 8e dargestellten Verfahrensschritt wird das zweite Substrat W2, welches insbesondere auch ein entsprechendes SOI-Wafersubstrat W20, W20' mit entsprechender dielektrischen Schicht D11 umfassen kann mittels der zweiten Vorderseite V2 auf die erste Vorderseite V1 aufgebracht, wobei die Bondverbindung B1 insbesondere die Wanne WA hermetisch verschließt. Die Bondverbindung B1 umfasst hierbei die erste Oxidschicht O1 wie in Bezug zur Fig. 8d beschrieben.

Alternativ ist denkbar, dass als zweites Substrat W2 ein direkt-bondfähiger Wafer verwendet wird, der beispielsweise durch einen geeigneten CMP-Prozess auf eine erforderliche Dicke zum Ausbilden des ersten membranartigen Widerstandsbereichs R3 zurückgeschliffen wird. Durch das Anordnen des zweiten Substrats W2 auf die erste Vorderseite V1 des ersten Substrats W1 werden die im Schritt der Fig. 8d dargestellten Durchgangslöcher D31, D32, D41 und D42 durch die zweite Vorderseite V2 des zweiten Substrats W2 bedeckt und/oder hermetisch verschlossen. Durch diesen Schritt wird das weitere Prozessieren besonders vereinfacht. Durch das hier beschriebene Herstellungsverfahren kann insbesondere darauf verzichtet werden, auf ein aufwändiges Öffnen oder Durchbrechen der ersten Oxidschicht O1 - thermisch aufgewachsene Siliziumdioxidschicht - zum Ausbilden von entsprechenden Durchgangslöchern D31, D32, D41, D42 zurückzugreifen.

In dem in Fig. 8f dargestellten Verfahrensschritt wird das zweite Substrat W2 rückseitig strukturiert. Hierbei bildet sich insbesondere eine zweite Verdrahtungsebene VE2 aus. Ferner wird der erste membranartige Widerstandsbereich R3 und der Referenzwiderstand R4 ausgebildet. Die Strukturierung kann mittels RIE durchgeführt werden, wobei die erste Oxidschicht O1, welche an der ersten Vorderseite V1 ausgebildet ist bzw. die Bondverbindung B1 des ersten Substrats W1 als weitere Ätzstoppschicht fungiert.

In dem in Fig. 8g dargestellten Verfahrensschritt wird von der ersten Rückseite R1 und von der zweiten Rückseite R2 Siliziumcarbid abgeschieden und anschließend das Siliziumcarbid derart strukturiert, dass die Widerstandsbereiche R3 bzw. R4 vorder- sowie rückseitig elektrisch kontaktierbar sind. Beispielsweise wird dies durch beidseitige CVD-Abscheidung des Siliziumcarbids erzielt. Das Siliziumcarbid ist insbesondere hochleitfähig und weist eine Dicke von 0,1 Mikrometer bis 3 Mikrometer auf. Da das Siliziumcarbid vor dem Strukturieren vollständig auf den jeweiligen freiliegenden Flächen des ersten Substrats W1 und des zweiten Substrats W2 Flächen aufgewachsen bzw. abgeschieden wird, wird die mikromechanische Drucksensorvorrichtung vor einer weiteren Oxidation während des Betriebs geschützt.

Das Siliziumcarbid stellt insbesondere eine oberste Schicht des ersten membranartigen Widerstandsbereichs R3 dar. Des Weiteren wird durch das Siliziumcarbid eine Kontaktierung zwischen der ersten und der zweiten Verdrahtungsebene VE1, VE2 realisiert. Gleichzeitig basieren die Durchkontaktierungen K31, K32, K41, K42 auf dem Siliziumcarbid.

In dem in Fig. 8h dargestellten Verfahrensschritt wird eine Rückseitenmetallisierung entsprechend auf der ersten Rückseite R1 auf entsprechenden Bereichen der Durchkontaktierungen K31, K32, K41, K42 ausgebildet. Mittels der sich ausbildenden metallischen Kontakte M1 kann die nunmehr fertiggestellte mikromechanische Drucksensorvorrichtung elektrische mit weiteren Komponenten verbaut werden. So lassen sich die metallische Kontakte M1 auf einfache Art und Weise vor beispielsweise hohen Temperaturen schützen. Dies kann insbesondere vorteilhaft bei einem Brennraumdruckmesser sein.

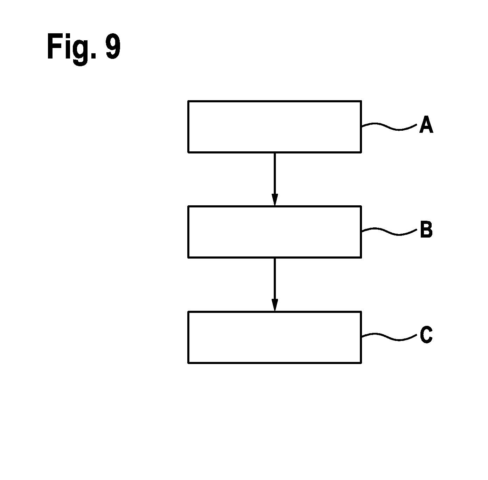

Fig. 9 ist ein Flussdiagramm zur Erläuterung des Herstellungsverfahrens der mikromechanischen Drucksensorvorrichtung gemäß der vierten Ausführungsform der vorliegenden Erfindung.

Fig. 9 zeigt den Verfahrensablauf der Herstellungsverfahrens der mikromechanischen Drucksensorvorrichtung gemäß der vierten Ausführungsform mit den Verfahrensschritten A, B und C.

Die Verfahrensschritte A, B, und C können in der gezeigten Reihenfolge ablaufen, wodurch sich Verfahrensschritte einsparen lassen.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuterten Beispiele beschränkt.

Obwohl bei den obigen Ausführungsformen die Bondverbindung über ein Siliziumdioxid Interface hergestellt wird, ist sie nicht darauf beschränkt. Alternative Bondverfahren sowohl mit als auch ohne Haftvermittler schließt die Erfindung ein.

Obwohl bei den obigen Ausführungsformen der membranartige erste Widerstandsbereich aus einem leitfähigen Halbleitermaterial bzw. Metall bestand, kann dieser auch mit einem Isolator, z.B. Siliziumnitrid oder Mullit, hergestellt werden. In diesem Fall benötigt man eine weitere leitfähige Schicht auf dem Widerstandsbereich, um den Sensor elektrisch auswerten zu können. Diese kann sowohl aus einem Halbleitermaterial als auch aus einem metallischen Material bestehen.

Obwohl die Durchkontaktierungen bei den obigen Ausführungsformen nur dünnflächig dargestellt sind, können diese selbstverständlich auch die entsprechenden Durchgangslöcher vollständig füllen.

Obwohl die Leiterbahnen L12, L32, L43, L41 in den gezeigten Beispielen über die Rückseiten R1 und R2 geführt werden, können diese auch über die Vorderseiten V1 und V2 geführt werden.

## Patentansprüche

1. Mikromechanische Drucksensorvorrichtung mit:
einem ersten Substrat (W1) mit einer ersten Vorderseite (V1) und einer ersten Rückseite (R1);
einer in dem ersten Substrat (W1) ausgebildeten Wanne (WA), wobei in der Wanne (WA) eine erste Elektrode (E3) ausgebildet ist, welche sich über die Wanne (WA) hinaus in eine Peripherie der Wanne (WA) auf der erste Vorderseite (V1) erstreckt;
einem zweiten Substrat (W2) mit einer zweiten Vorderseite (V2) und einer zweiten Rückseite (R2);
wobei die erste Vorderseite (V1) und die zweite Vorderseite (V2) derart über eine Bondverbindung (B1) miteinander verbunden sind, dass ein erster membranartiger Widerstandsbereich (R3) die erste Elektrode (E3) zum Bilden einer Kaverne (K) mit vorbestimmter Druckatmosphäre verschließt und in der Peripherie der Wanne (WA) die erste Elektrode (E3) elektrisch kontaktiert; und
wobei der erste Widerstandsbereich (R3) durch Anlegen von Druck (P) in die Wanne (WA) auslenkbar ist, so dass er die erste Elektrode (E3) innerhalb der Wanne (WA) elektrisch kontaktiert.

2. Mikromechanische Drucksensorvorrichtung nach Anspruch 1, wobei das erste Substrat (W1) zumindest bereichsweise eine dielektrische Schicht (D11) umfasst und die dielektrische Schicht (D11) als Ätzstoppschicht (AE1) fungiert.

3. Mikromechanische Drucksensorvorrichtung nach einem der vorhergehenden Ansprüche, wobei die Bondverbindung (B1) auf eine auf der ersten Vorderseite (V1) thermisch aufgewachsene erste Oxidschicht (O1) zurückführbar ist.

4. Mikromechanische Drucksensorvorrichtung nach einem der vorhergehenden Ansprüche, wobei das erste Substrat (W1) eine erste Durchkontaktierung (K31) zum elektrischen Kontaktieren des ersten Widerstandsbereichs (R3) von der ersten Rückseite (R1) aus und eine zweite Durchkontaktierung (K32) zum elektrischen Kontaktieren der ersten Elektrode (E3) von der ersten Rückseite (R1) aus aufweist.

5. Mikromechanische Drucksensorvorrichtung nach einem der vorhergehenden Ansprüche, wobei eine zweite Elektrode (E4) auf der ersten Vorderseite (V1) in Abstand zur ersten Elektrode (E3) ausgebildet ist, wobei auf der zweiten Vorderseite (V2) ein zweiter Widerstandsbereich (R4) in Abstand zum ersten Widerstandsbereich (R3) ausgebildet ist und wobei die erste Vorderseite (V1) und die zweite Vorderseite (V2) derart über die Bondverbindung (B1) miteinander verbunden sind, dass der zweite Widerstandsbereich (R4) die zweite Elektrode (E4) unabhängig vom angelegten Druck (P) elektrisch kontaktiert.

6. Mikromechanische Drucksensorvorrichtung nach einem der vorhergehenden Ansprüche, wobei das erste Substrat (W1) eine dritte Durchkontaktierung (K41) zum elektrischen Kontaktieren des zweiten Widerstandsbereichs (R4) von der ersten Rückseite (R1) aus und eine vierte Durchkontaktierung (K42) zum elektrischen Kontaktieren der zweiten Elektrode (E4) von der ersten Rückseite (R1) aus aufweist.

7. Mikromechanische Drucksensorvorrichtung nach einem der vorhergehenden Ansprüche, wobei die dielektrische Schicht (D11) jeweils durch Durchgangslöcher (D31, D32, D41, D42) durchbrochen ist.

8. Mikromechanische Drucksensorvorrichtung nach einem der vorhergehenden Ansprüche, wobei der zweite Widerstandsbereich (R4) über Leiterbahnabschnitte (L41), von der zweiten Rückseite (R2) elektrisch kontaktierbar ist.

9. Mikromechanische Drucksensorvorrichtung nach einem der vorhergehenden Ansprüche, wobei das erste Substrat (W1) und/oder das zweite Substrat (W2) jeweils ein SOI-Wafersubstrat (W10; W20) umfassen.

10. Mikromechanische Drucksensorvorrichtung nach einem der vorhergehenden Ansprüche, wobei der erste Widerstandsbereich (R3) über Leiterbahnabschnitte (L32), von der zweiten Rückseite (R2) elektrisch kontaktierbar ist.

11. Herstellungsverfahren für eine mikromechanische Drucksensorvorrichtung mit den Schritten:
A) Bilden von einem ersten Substrat (W1) mit einer ersten Vorderseite (V1) und einer ersten Rückseite (R1), in dem eine Wanne (WA) ausgebildet ist, wobei in der Wanne (WA) eine erste Elektrode (E3) ausgebildet ist, welche sich über die Wanne (WA) hinaus in eine Peripherie der Wanne (WA) auf der erste Vorderseite (V1) erstreckt;
B) Bilden von einem zweiten Substrat (W2) mit einer zweiten Vorderseite (V2) und einer zweiten Rückseite (R2);
C) Verbinden der ersten Vorderseite (V1) und der zweiten Vorderseite (V2) über eine Bondverbindung (B1) derart miteinander, dass das zweite Substrat (W2) als ein erster Widerstandsbereich (R3) die erste Elektrode (E3) zum Bilden einer Kaverne (K) mit vorbestimmter Druckatmosphäre verschließt und in der Peripherie der Wanne (WA) die erste Elektrode (E3) elektrisch kontaktiert; und
wobei der erste Widerstandsbereich (R3) durch Anlegen von Druck (P) in die Wanne (WA) auslenkbar ist, so dass er die erste Elektrode (E3) innerhalb der Wanne (WA) elektrisch kontaktiert.

12. Herstellungsverfahren nach Anspruch 11, wobei das erste Substrat (W1) eine dielektrische Schicht (D11) umfasst und die dielektrische Schicht (D11) als Ätzstoppschicht (AE1) eingesetzt wird.

13. Herstellungsverfahren nach Anspruch 11, wobei das Bilden der Wanne (WA) von der ersten Vorderseite (V1) des ersten Substrats (W1) und das Bilden des ersten Widerstandsbereichs (R3) von der zweiten Rückseite (R2) des zweiten Substrats (W2) erfolgen.

14. Herstellungsverfahren nach Anspruch 11, wobei in dem ersten Substrat (W1) eine erste Durchkontaktierung (K31) zum elektrischen Kontaktieren des ersten Widerstandsbereichs (R3) von der ersten Rückseite (R1) aus und eine zweite Durchkontaktierung (K32) zum elektrischen Kontaktieren der ersten Elektrode (E3) von der ersten Rückseite (R1) aus gebildet werden.

15. Herstellungsverfahren nach Anspruch 11 bis 14, wobei zum Verbinden über die Bondverbindung (B1) eine erste Oxidschicht (O1) an der ersten Vorderseite (V1) des ersten Substrats (W1) gebildet wird und mittels der ersten Oxidschicht (O1) das erste Substrat (W1) mit dem zweiten Substrat (W2) in einem Hochtemperaturschritt miteinander verbunden werden.
